# EUROPEAN PATENT APPLICATION

(11) **EP 0 723 921 A2**
(43) Date of publication of application: **31.07.1996**
(21) Application number: 96830019.4
(22) Date of filing: 22.01.1996
(51) Int. Cl.: B65D 83/00

(54) **Bottle packaging for liquids to be drawn off in doses**

(30) Priority: 25.01.1995 IT FI950011
(71) Applicant: LEVETTA PROJECT S.a.s. di Maffei e C., 51100 Pistoia (IT)
(72) Inventor: Maffei, Camilla, 51100 Pistoia (IT)
(74) Representative: Mannucci, Gianfranco, Dott.-Ing.

(57) **Abstract**

For drawing off liquid in doses of volume which is predetermined, also variable, there is provided a syringe device with a cylinder (5) associated with the removable obturator (3) of the bottle, and a piston (9) which is maneuvrable from the outside; provided on the shaft (9A) of the piston (9) is a graduation (G), by means of which it is possible to assess from the outside the volume of liquid drawn by the sliding of the piston.

## Description

The invention relates to a bottle packaging for drawing off liquid in doses of a volume which is predetermined, variable at will also and easily calculated, unlike current systems with a dropper device. Aims and advantages of the invention will become clear from the text which follows.

The device comprises essentially a syringe means, with a cylinder associated with a removable obturator of the bottle and a piston which is maneuvrable from the outside for sucking in the liquid; a graduation is provided, by means of which it is possible to assess from the outside the volume of liquid drawn by the sliding of the piston.

In practice, the graduation can be provided on the shaft of the piston, the index being constituted by the obturator.

To allow easy handling and avoid depressions in the bottle during the drawing of liquid into the syringe, there can be provided, on the leakproof coupling surfaces between bottle and obturator, grooves arranged to allow inlet of air and prevent outlet of liquid.

Suitable retention systems are to be provided to prevent the extraction of the piston from the cavity of the cylinder engaged on the obturator.

The invention will be better understood by following the description and the attached drawing which shows a non-limiting exemplary embodiment of the invention itself. In the drawing
Fig. 1 shows a view in section of a first exemplary embodiment of the invention;
Fig. 2 shows an enlarged detail of Fig. 1;
Fig. 3 shows a local view along III-III in Fig. 2;
Figs 4 and 5 show alternative embodiments relating to particular devices which can be considered in the obturator.

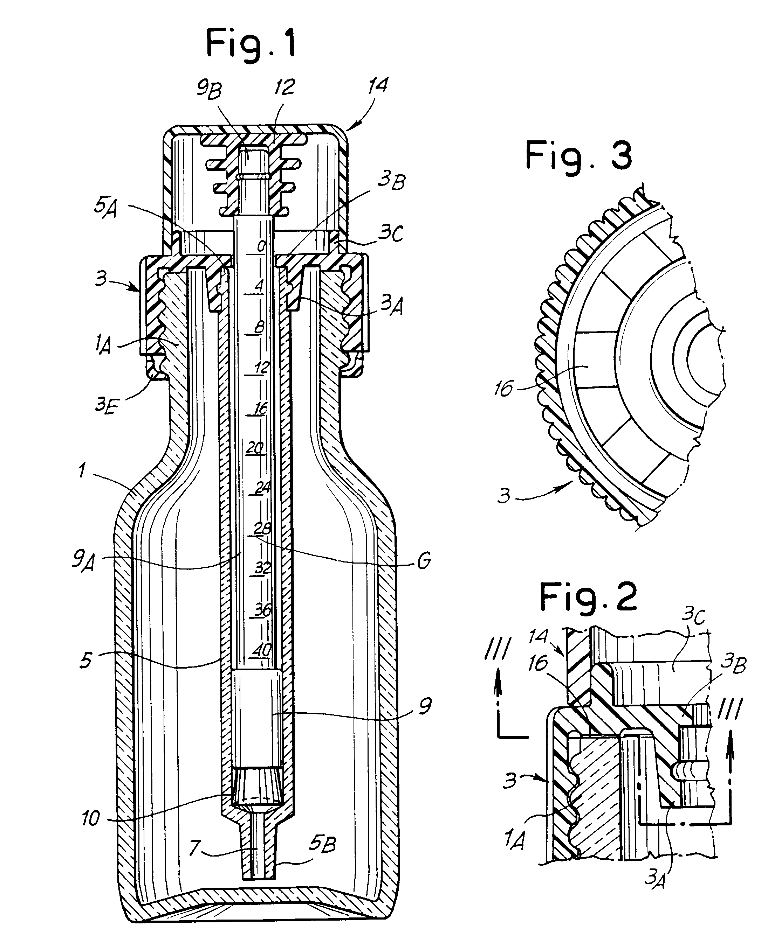

According to what is illustrated in the attached drawing and with particular initial reference to Figs 1 to 3, 1 indicates the bottle, on the - usually screw-type - neck 1A of which an obturator 3 is applied. The obturator 3 forms centrally a bush 3A forming a through-seat for the aims indicated below. In particular, the bush 3A has a shape capable of receiving and retaining by means of an annular undercut (or similar) the end 5A of a syringe cylinder 5 which at the lower end 5B has an inlet hole 7; when the obturator is applied, this inlet hole 7 comes to be situated close to the bottom of the bottle 1. It is not excluded that the syringe cylinder 5 with its shapings can be made directly with the same material as the obturator 3, but execution as two components may be more convenient. The obturator 3 is perforated in the central zone in the region of the bush 3A to constitute a ledge 3B inside the open end 5A of the syringe cylinder 5; the formation of the ledge 3B renders more suitable in a practical manner the production as two components of the obturator 3 and of the syringe cylinder 5. In this case, the ledge 3B can be formed directly as a collar which projects inside the cross-section of the cavity of the cylinder 5.

9 indicates a piston which is capable of sliding in the cavity of the cylinder 5 and which forms or can be equipped with a seal 10 which is added to interact with the internal surface of the cavity of the syringe cylinder 5. In brief, the cylinder 5 and the piston 9 with its shaft 9A are made like traditional syringes especially of the small capacity type. The shaft 9A emerges from the cavity of the cylinder 5 through the passage formed in the obturator 3 centrally in the region of the bush 3A; in particular, the shaft 9A emerges from the collar ledge 3B formed by the obturator 3. At the external end 9B of the shaft 9, a suitable handling knob 12 can be engaged, or said external end 9B can be formed with a corrugation with rings or the like respectively, to ensure in any case grip and the possibility of sliding maneuvring of the shaft 9A and therefore of the piston 9 with its seal 10.

The end 9B of the shaft 9A with any knob 12 engaged thereon can be protected by means of a covering cap 14. This covering cap 14 can be applied so as to constitute a safety seal in combination with the obturator 3 which can for this purpose be equipped with a collar 3C; the covering cap 14 is engaged in a removable manner with said collar. It is possible to provide a retention means in the manner of a safety seal between the obturator 3 and the covering cap 14, such as a strip defined by incisions which are circumferentially tearable to free said covering cap or another suitable system. The obturator 3 is in turn advantageously to be equipped with its own safety seal, as indicated concisely by 3E in Fig. 1.

On the shaft 9A of the piston 9 is a graduation G which can be arranged to interact with an index which is made on the obturator 3 and which can for example be the same upper edge of the annular ledge 3B for retention of the piston. By means of this graduation G, in interaction with said index combined with the obturator 3, it is possible to assess from the outside and immediately the travel imposed on the piston 9 and with this the volume of liquid which the piston 9 is capable of drawing into the inside of the syringe cylinder 5 in relation to the travel imposed on the shaft 9A of the piston 9 itself. It is thus possible to fix the quantity of liquid drawn off from the bottle by means of the syringe. After the operation of drawing the liquid into the syringe, it is possible to remove the obturator from the bottle and discharge the liquid in the arranged amount assessed by means of the graduation G for use and the administration of such dosed liquid.

The operation of sucking the liquid from the bottle into the syringe can be actuated with the obturator 3 applied fully to the bottle or after having even slightly removed the obturator 3 from the neck 1A of the bottle. When the sucking-in operation is to be carried out in conditions of the obturator 3 being applied fully, it may be necessary to arrange some possibility for inlet of air into the bottle itself to compensate for the depression inside the bottle brought about by means of the maneuvring of the piston 9 of the syringe 5. This inlet of air - as shown in Figs 2 and 3 - can be obtained by providing suitable grooves 16 in the edge of the obturator 3 which interacts with the end of the neck 1A of the bottle, or with similar grooves arranged in the edge of the neck 1A of the bottle; the grooves, in a manner known per se, are arranged to allow the inlet of air but not the outlet of liquid.

The safety seal such as 3E in the obturator 3 allows control of the integrity of the packaging. The covering cap 14 can be retained even without arranging for it a similar safety seal as the drawing off of liquid is not possible except with the removal of the obturator 3.

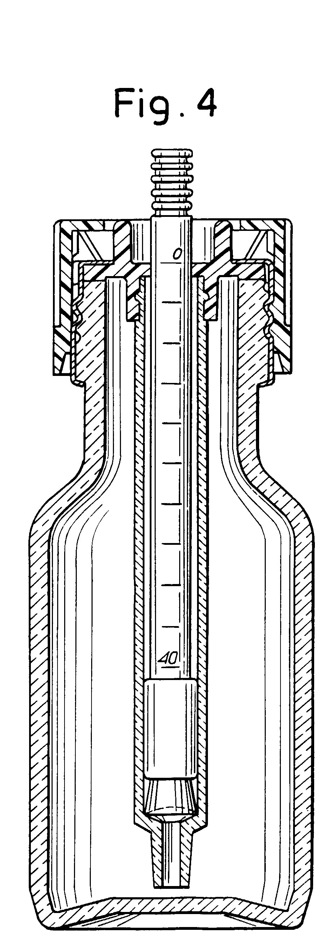

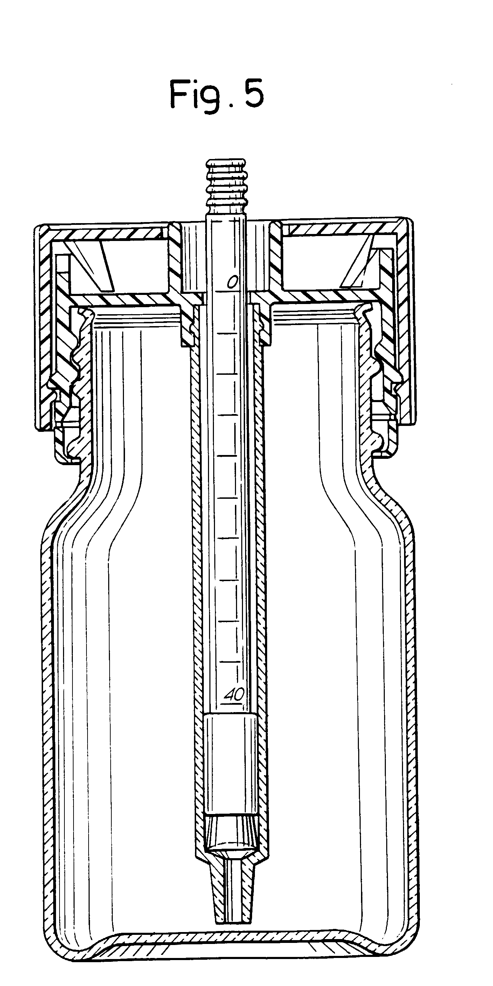

The obturator 3 can be made in any suitable manner with any system of security to prevent maneuvring by children. In Figs 4 and 5, two possible solutions for providing the obturator 3 with security in the abovementioned sense. Also developed in Figs 4 and 5 are different forms of the obturator 3, with provision of metal capsules or with other devices which are known per se and known to experts in the field.

With this arrangement, a convenient possibility of dosed and variable quantities is achieved - even with ample possibility of variation - and without the necessity of resorting to dropper systems which, apart from being inaccurate, are also relatively inconvenient because of the necessity of having to carry out counts which can be tiresome and prolonged when a considerable quantity of drops has to be counted for the drawing off of a relatively great unit quantity of liquid. By controlling the sliding of the piston 9 with the graduation G, rapid assessment of the quantity, even if great, of liquid for drawing off unit quantities is possible.

It is understood that the drawing shows only an exemplifaction given only as a practical demonstration of the invention, it being possible for this invention to vary in form and arrangement without however leaving the scope of the concept which forms the invention itself. It is for example possible to provide a graduation on the external surface of the cylinder 5 of the syringe when the bottle 1 and the cylinder 5 are made of transparent material and the liquid contained does not opacify the surfaces of these two components.

## Claims

1. A bottle packaging for drawing off liquid in doses of predetermined volume, which comprises a syringe device, with a cylinder (5) associated with a removable obturator (3) of the bottle and a piston (9) which is maneuvrable from the outside for sucking in the liquid in the desired dose and measuring simultaneously from the outside the volume of liquid drawn by the sliding of the piston by means of a graduation.

2. The packaging as claimed in claim 1, wherein the graduation (G) is provided on the shaft (9A) of the piston (9), it being possible for the index to be constituted by the obturator.

3. Packaging as claimed in claim 1 or 2, which comprises a retention ledge (3B) capable of preventing the extraction of the piston (9) from the cylinder (5) of the syringe.

4. The packaging as claimed in at least one of the preceding claims, which comprises - on the leakproof coupling surfaces between bottle (1, 1A) and obturator (3) - grooves (16) arranged to allow inlet of air and prevent outlet of liquid.

5. Bottle packaging for liquids to be drawn off in doses; the whole as described above and represented by way of exemplification in the attached drawing.
